(19) **Europäisches Patentamt**

**European Patent Office**

**Office européen des brevets**

(11) Numéro de publication: **0 532 085 A1**

# (12) DEMANDE DE BREVET EUROPEEN

(21) Numéro de dépôt: **92202630.7**

(22) Date de dépôt: **31.08.92**

(51) Int. Cl.[5]: **C04B 35/46**, H01C 7/02

(30) Priorité: **09.09.91 BE 9100837**

(43) Date de publication de la demande:
**17.03.93 Bulletin 93/11**

(84) Etats contractants désignés:
**AT BE CH DE ES FR GB IT LI NL SE**

(71) Demandeur: **SOLVAY (Société Anonyme)**
**Rue du Prince Albert, 33**
**B-1050 Bruxelles(BE)**

(72) Inventeur: **Wautier, Henri**
**Rue Louis Catala 19**
**B-7090 Braine-Le-Comte(BE)**
Inventeur: **Legrand, Franz**
**Rue des Vaches 71**
**B-7390 Ouaregnon(BE)**
Inventeur: **Van Cauwenbergh, Marianne**
**Dorpsstraat 51**
**B-1851 Humbeek(BE)**

(74) Mandataire: **Decamps, Alain René François et al**
**SOLVAY & Cie S.A. Département de la Propriété Industrielle Rue de Ransbeek, 310**
**B-1120 Bruxelles (BE)**

(54) **Compositions solides d'oxydes métalliques mixtes et résistances électriques obtenus par frittage d'une poudre d'oxydes métalliques mixtes.**

(57) Compositions solides d'oxydes métalliques mixtes comprenant du titanate de baryum dans laquelle une partie de l'oxyde de baryum a été remplacée par des oxydes d'autres métaux choisis parmi les oxydes de calcium, de plomb, d'antimoine, de manganèse et de silicium répondant à la formule brute suivante :

$$Ba_x\ Ca_y\ Pb_z\ Ti_{1,0}\ Sb_t\ Mn_u\ Si_v\ O_w$$

dans laquelle x, y, z, t, u, v et w sont des nombres décimaux tels que

$0 \leq y \leq 0,1$
$z > 0$
$0,99 \leq x + y + z \leq 1,025$
$0,002 \leq t \leq 0,006$
$0,0004 \leq u \leq 0,0012$
$0 \leq v \leq 0,01$
$x + y + z + 2 + \frac{3t}{2} + u + 2v < w < x + y + z + 2 + \frac{5t}{2} + \frac{7u}{2} + 2v$

Résistances électriques à coefficient de température positif obtenues par frittage d'une telle composition.

Rank Xerox (UK) Business Services
(3. 10/3.5x/3.0. 1)

EP 0 532 085 A1

L'invention concerne des compositions solides d'oxydes métalliques mixtes destinées à la fabrication de résistances électriques à coefficient de température positif et des résistances électriques à coefficient de température positif obtenues par frittage d'une poudre d'oxydes métalliques mixtes.

Les résistances électriques à coefficient de température positif (résistances PTC) présentent une augmentation importante de leur résistivité dans une plage étroite de température et sont utilisées dans un grand nombre d'applications diverses telles que les appareils de chauffage, l'automobile et les appareils électroniques de grande consommation. Leur fabrication implique la réalisation de céramiques obtenues par frittage de compositions à base de titanate de baryum dopé par des oxydes métalliques. On sait que par incorporation de plomb dans la composition, il a été possible d'obtenir des températures de basculement (température à laquelle la résistivité s'accroît brusquement de plusieurs ordres de grandeur) aussi élevées que 300 °C. (R.C. Buchanan, Ceramic Materials for Electronics, Marcel Dekker Inc. New-York 1986, page 326 à 352). On connaît aussi l'intérêt d'incorporer dans de telles compositions des petites quantités d'agents dopants constitués par des oxydes de métaux divalents tels que le calcium et le manganèse, de métaux tétravalents tels que le silicium ou de métaux pentavalents tels que l'antimoine (pages 333 à 339). Un excès de titane par rapport aux autres métaux s'est révélé avantageux pour obtenir des densités plus élevées, réduire les températures de frittage et mieux contrôler la structure microcristalline (page 339).

Ces compositions connues présentent cependant le désavantage de donner lieu à un phénomène de volatilisation du plomb lors de l'opération de frittage à haute température.

L'invention vise à remédier aux inconvénients des compositions connues en fournissant de nouvelles compositions qui permettent d'obtenir par frittage des céramiques qui présentent un effet PTC important, ainsi qu'une pente élevée de résistivité tout en ne donnant lieu qu'à une volatilisation peu importante du plomb lors du frittage à haute température.

L'invention concerne dès lors des compositions solides d'oxydes métalliques mixtes comprenant du titanate de baryum, dans laquelle une partie de l'oxyde de baryum a été remplacée par des oxydes d'autres métaux choisis parmi les oxydes de calcium, de plomb, d'antimoine, de manganèse et de silicium, et qui répondent à la formule brute suivante :

$$Ba_x \, Ca_y \, Pb_z \, Ti_{1,0} \, Sb_t \, Mn_u \, Si_v \, O_w$$

dans laquelle x, y, z, t, u, v et w sont des nombres décimaux tels que

$$0 \leq y \leq 0,1$$
$$z > 0$$
$$0,99 \leq x + y + z \leq 1,025$$
$$0,002 \leq t \leq 0,006$$
$$0,0004 \leq u \leq 0,0012$$
$$0 \leq v \leq 0,01$$
$$x + y + z + 2 + \frac{3t}{2} + u + 2v < w < x + y + z + 2 + \frac{5t}{2} + \frac{7u}{2} + 2v$$

Par composition solide d'oxydes métalliques mixtes, on entend désigner une composition solide comprenant des oxydes d'au moins deux métaux différents.

De manière préférée, l'invention s'adresse à des compositions telles que : $x + y + z \geq 1,0$.

Les valeurs de y qui ne dépassent pas 0,05 sont particulièrement préférées.

Il s'est par ailleurs révélé particulièrement avantageux que les compositions selon l'invention soient telles que les proportions respectives d'oxyde de baryum, de calcium et de plomb vérifient l'expression suivante : $x + y + z \leq 1,02$.

La quantité d'oxyde de plomb dans les compositions selon l'invention doit être réglée pour obtenir la température de basculement visée des résistances PTC.

Dans les compositions selon l'invention, on introduit des oxydes d'antimoine en faible quantité dans le but de diminuer la résistivité à température ambiante des céramiques obtenues et d'améliorer la finesse des grains. Il est intéressant que la quantité d'antimoine dans les compositions de l'invention soit telle que t soit supérieur à 0,0025. Il sera aussi avantageux que t ne dépasse pas 0,0035. D'une manière préférée, il convient que la teneur en antimoine soit telle que la valeur de t soit égale à environ 0,003.

L'incorporation de très faibles quantités d'oxyde de manganèse dans les compositions selon l'invention a pour fonction d'augmenter l'effet PTC des céramiques obtenues après frittage. Pour atteindre un effet maximal, il est recommandé de mettre en oeuvre une quantité de manganèse telle que u soit supérieur à 0,0005. D'excellents résultats sont aussi obtenus lorsque u est sélectionné parmi les valeurs inférieures à 0,0007. Les meilleurs résultats ont été obtenus pour une valeur de u égale à environ 0,0006.

On incorpore généralement une petite quantité d'oxyde de silicium dans les compositions de l'invention dans le but d'obtenir une meilleure uniformité des grains et de faciliter le frittage. De préférence, on mettra en oeuvre une quantité de silicium telle que $v$ soit plus grand que 0,001. Il est aussi avantageux que $v$ soit inférieur à 0,008. D'excellents résultats ont été obtenus avec une valeur de $v$ égale à environ 0,005.

Dans le cas d'une composition particulière dont la teneur en Pb a été réglée pour que $z = 0,32$, les meilleurs résultats ont été obtenus en ajustant les différents paramètres de telle façon qu'ils présentent simultanément les valeurs suivantes :

$y = 0,025$

$t = 0,003$

$u = 0,0006$

$v = 0,005$

$1,0 \leq x + y + z \leq 1,02.$

Les compositions solides selon l'invention peuvent être obtenues par toutes techniques adéquates pour la production de compositions solides d'oxydes métalliques, notamment par la technique de précipitation à partir d'une solution de dérivés des métaux intervenant dans ces compositions.

L'invention concerne dès lors aussi un procédé pour la fabrication d'une composition solide d'oxydes métalliques mixtes selon lequel on précipite un mélange d'oxalates de baryum, de titane et des autres métaux par mélange d'une solution alcoolique d'alcoolate de titane, d'acétate ou d'hydroxyde des autres métaux et d'acide oxalique avec une solution alcoolique d'hydroxyde de baryum, puis on sèche et calcine le précipité obtenu dans un four.

Selon une variante préférée du procédé selon l'invention, on précipite un mélange d'oxalates de baryum, de titane, de calcium, de plomb, d'antimoine, de manganèse et de silicium par mélange d'une solution méthanolique d'isopropylate de titane, d'acétates de calcium, de plomb, d'antimoine et de manganèse, d'éthylate de silicium avec une solution méthanolique d'acide oxalique et ensuite avec une solution méthanolique d'hydroxyde de baryum.

L'invention concerne aussi des résistances électriques à coefficient de température positif en matériau céramique obtenues par frittage à haute température d'une composition solide conforme à l'invention.

Les exemples qui suivent sont donnés dans le but d'illustrer l'invention, sans pour autant en limiter sa portée. Les exemples 1R et 2R sont donnés à titre de comparaison. Les exemples 3 et 4 ont été réalisés conformément à l'invention.

Exemples 1R et 2R : (non conformes à l'invention)

Dans un becher, on a successivement introduit : 14,07 g d'une solution d'acétate de calcium monohydraté dans le méthanol contenant 0,025 mole de Ca/kg de solution, 45,03 g d'une solution d'acétate de plomb trihydraté dans le méthanol contenant 0,1 mole de plomb/kg de solution, 1,69 g d'une solution d'acétate d'antimoine monohydraté dans le méthanol contenant 0,025 mole d'antimoine/kg de solution, 0,84 g d'une solution d'acétate de manganèse monohydraté dans le méthanol contenant 0,01 mole de manganèse/kg de solution, 0,70 g d'une solution d'éthylate de silicium dans le méthanol contenant 0,1 mole de silicium/kg de solution et 4 g d'une solution d'isopropylate de titane pur.

On a ensuite introduit, sous forte agitation réalisée au moyen d'un barreau magnétique, 40 g d'une solution fraîchement préparée d'acide oxalique dihydraté dans le méthanol contenant 0,53 mole de $H_2C_2O_4$/kg de solution, puis 10,99 g (exemple 1R) ou 12,05 g (exemple 2R) d'une solution d'hydroxyde de baryum monohydraté contenant 0,8 mole de baryum/kg de solution.

On a poursuivi l'agitation pendant 30 minutes, puis on a concentré et séché le précipité par chauffage sous vide.

Après séchage du précipité, on l'a calciné dans un four sous air sec jusqu'à une température de 750 °C que l'on a maintenue pendant deux heures. La vitesse de montée du four en température a été de 100 °C/heure.

Après refroidissement, on a recueilli des poudres non agglomérées d'oxydes métalliques mixtes de diamètre moyen inférieur à 0,6 $\mu$m (selon analyse granulométrique effectuée sur un granulomètre à laser de marque MALVERN) qui répondent à la formule suivante :

$Ba_x Ca_{0,025} Pb_{0,32} Ti_{1,0} Sb_{0,003} Mn_{0,0006} Si_{0,005} O_w$

Les poudres obtenues après pressage et frittage à 1350 °C pendant 5 minutes (vitesse de montée et de descente en température réglée à 600 °C/h) ont présenté les caractéristiques suivantes :

| Exemple No | Ba + Ca + Pb/Ti | Résistivité à 25 °C Q.cm | Pente de la résistivité %/°C | Effet PTC | Densité g/cm3 |
|---|---|---|---|---|---|
| 1R | 0,97 | 11000 | 22 | 3,1 | 5,6 |
| 2R | 1,03 | 410 | 16 | 2,4 | 6,2 |

Exemples 3 et 4 : (conformes à l'invention)

On a reproduit les exemples 1R et 2R en modifiant la quantité d'hydroxyde de baryum à 11,70 g (exemple 3) et 11,87 g (exemple 4) de la solution d'hydroxyde de baryum monohydraté contenant 0,8 mole de baryum/kg de solution.

Les résultats obtenus ont été les suivants :

| Exemple No | Ba + Ca + Pb/Ti | Résistivité à 25 °C Q.c | Pente de la résistivité %/°C | Effet PTC | Densité g/cm3 |
|---|---|---|---|---|---|
| 3 | 1,01 | 340 | 31 | 3,6 | 6,0 |
| 4 | 1,02 | 250 | 32 | 3,3 | 6,2 |

**Revendications**

1. Compositions solides d'oxydes métalliques mixtes comprenant du titanate de baryum dans laquelle une partie de l'oxyde de baryum a été remplacée par des oxydes d'autres métaux choisis parmi les oxydes de calcium, de plomb, d'antimoine, de manganèse et de silicium, caractérisées en ce qu'elles répondent à la formule brute suivante :

$$Ba_x \ Ca_y \ Pb_z \ Ti_{1,0} \ Sb_t \ Mn_u \ Si_v \ O_w$$

dans laquelle x, y, z, t, u, v et w sont des nombres décimaux tels que

$0 \leq y \leq 0,1$
$z > 0$
$0,99 \leq x + y + Z \leq 1,025$
$0,002 \leq t \leq 0,006$
$0,0004 \leq u \leq 0,0012$
$0 \leq v \leq 0,01$
$x + y + z + 2 + \frac{3t}{2} + u + 2v < w < x + y + z + 2 + \frac{5t}{2} + \frac{7u}{2} + 2v$

2. Compositions selon la revendication 1, caractérisées en ce que x, y et z sont tels que

$1,0 \leq x + y + z \leq 1,02.$

3. Compositions selon la revendication 1 ou 2, caractérisées en ce que t est égal à environ 0,003.

4. Compositions selon l'une quelconque des revendications 1 à 3, caractérisées en ce que u est égal à environ 0,0006.

5. Compositions selon l'une quelconque des revendications 1 à 4, caractérisées en ce que v est égal à environ 0,005.

6. Compositions selon les revendications 2 à 5, caractérisées en ce que t est égal à 0,003, u est égal à 0,0006 et v est égal à 0,005.

7. Résistances électriques à coefficient de température positif obtenues par frittage d'une composition solide selon l'une quelconque des revendications 1 à 6.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 415 428 (CENTRAL GLASS COMPANY,LTD.)<br>* exemple 11 * | 1 | C04B35/46<br>H01C7/02 |
| A | * le document en entier *<br>--- | 2-7 | |
| X | DE-A-2 552 127 (TDK ELECTRONICS)<br>* revendications; exemples *<br>--- | 1 | |
| X | GB-A-2 013 649 (NIPPON GAISHI KK)<br>* page 1, ligne 26 - page 2, ligne 58; revendications; exemples *<br>--- | 1-7 | |
| A | DE-A-3 210 083 (MURATA MFG. CO.,LTD.)<br>* le document en entier *<br><br>----- | 1-6 | |

**DOMAINES TECHNIQUES RECHERCHES (Int. Cl.5)**

C04B
H01C

Le présent rapport a été établi pour toutes les revendications

| Lieu de la recherche | Date d'achèvement de la recherche | Examinateur |
|---|---|---|
| LA HAYE | 01 DECEMBRE 1992 | HARBRON J.L. |